# EUROPEAN PATENT APPLICATION

(11) **EP 4 029 640 A1**
(43) Date of publication of application: **20.07.2022**
(21) Application number: 22151081.1
(22) Date of filing: 12.01.2022
(51) Int. Cl.: B23K 11/00, B23K 11/11, B23K 11/25, B23K 11/24, B21F 27/10, B23K 101/22

(54) **METHOD AND MEANS FOR THE PRODUCTION OF NET STRUCTURES**

(30) Priority: 13.01.2021 BE 202105017
(71) Applicant: Intersig NV, 9200 Dendermonde (BE)
(72) Inventor: OCKET, Piet, 9200 Dendermonde (BE); ROELANT, Tim, 9200 Dendermonde (BE); OCKET, Silke, 9052 Zwijnaarde (BE); OCKET, Jasper, 9052 Zwijnaarde (BE)
(74) Representative: De Clercq & Partners

(57) **Abstract**

The present invention relates to methods and means for the production of net structures consisting of a plurality of longitudinal wires and transverse wires which are welded together, such as nets, grids, fences and the like by means of a welding machine which comprises at least one welding electrode driven by at least one electrical actuator. The method comprises moving the welding electrode from a waiting position to a welding position at the welding point and the moving in step is carried out in at least two speed regimes, in particular at least one higher and at least one lower speed regime. The higher speed regime starts from the waiting position and corresponds to at least 95% of the total distance which is defined as the distance between the waiting position and the welding position and the lower speed regime runs up to the welding position and corresponds to at most 5% of the total distance. The average speed of the welding electrode in the higher speed regime is higher than the average speed in the lower speed regime.

## Description

### FIELD OF THE INVENTION

The present invention relates to methods and means for the production of net structures consisting of a plurality of mutually welded longitudinal wires and transverse wires, such as nets, grids, fences and the like.

### TECHNOLOGICAL BACKGROUND

Structures such as nets, grids or fences are typically produced by welding together at least two wires which are placed across one another. To this end, a welding machine may be used, which contains welding electrodes which are usually actuated by pneumatic or hydraulic actuators. The welding of net structures imposes high demands on the welding machine. A deformation of the wires caused by the welding process should, for example, not exceed a certain accuracy, so that the finished net structure does not have any deviations in the welded joints. The individual welded joints have to be of good and uniform weld quality throughout the entire net structure. With fine-meshed net structures where the distance between the wires is small or which consist of thin wires, it is particularly difficult to meet these demands. Due to the large number of welding points and the flexibility of the thin wires, the risk of welding defects or wire deformation is particularly great. The welding process itself also demands control of the correct welding depth to within a few milliseconds. Therefore, it has to be possible to adjust the welding time accurately.

Due to the complicated adjustment of pneumatic or hydraulic actuators, only limited control of the movement and positioning of the welding electrodes is possible. These actuators are configured in such a way that they strike the wires at high speed, resulting in a kind of "hammer effect" which may deform or displace these wires. Control of the welding process is also very limited because it is not possible to provide a feedback mechanism.

There is therefore a need to develop a new and improved welding machine in order to overcome the shortcomings of the prior art. In particular, there is a need for a welding machine which is able to weld longitudinal wires to transverse wires in a reliable and accurate way, without deforming or displacing these wires. There is also a need to improve control of the welding process in order to reduce the number of defects.

### SUMMARY

In order to meet the above-described needs and overcome the shortcomings of the prior art, the inventors have developed methods and means for the production of net structures consisting of a plurality of longitudinal wires and transverse wires which are welded to one another. These net structures may then be used as nets for the purpose of spacers in construction or industrial applications, such as in shopping trolleys, oven nets, barbecue nets, dishwasher trays, condenser panels for refrigerators or air conditioners and the like.

One aspect of the invention relates to a method for the production of net structures consisting of a plurality of longitudinal wires and transverse wires which are welded to one another by means of a welding machine which comprises at least one welding electrode driven by at least one electrical actuator;
the method comprising the following steps:
   (a). supplying longitudinal wires and transverse wires to the welding machine;
   (b). positioning the longitudinal wires and transverse wires at a welding point;
   (c). moving the welding electrode from a waiting position to a welding position at the welding point;
   (d). welding the longitudinal wires and transverse wires to one another at the welding point;
   (e). moving the welding electrode from the welding position to the waiting position;
   (f). optionally, repeating the above steps to produce a net structure;
wherein the moving in step (c) is carried out in at least two speed regimes, in particular at least one higher and at least one lower speed regime,
   - wherein the higher speed regime starts from the waiting position and corresponds to at least 95% of the total distance which is defined as the distance between the waiting position and the welding position, and the lower speed regime runs up to the welding position and corresponds to at most 5% of the total distance, and
   - wherein the average speed of the welding electrode in the higher speed regime is higher than the average speed in the lower speed regime.

One aspect of the invention relates to a welding machine which is configured for the production of net structures consisting of one or more longitudinal wires and transverse wires which are welded to one another;
the welding machine comprising:
- a wire supply apparatus which is configured to position supplied longitudinal wires and transverse wires at one or more welding points;
- at least one welding electrode which is configured to weld the longitudinal wires and transverse wires to one another at the welding points,
- at least one electrical actuator which is connected to the welding electrode and is configured to move this welding electrode from a waiting position to a welding position at the welding points, and vice versa; and,
- a control unit which is configured for
   - controlling the movement of the electrical actuator;
   - dividing the total distance between the waiting position and the welding position into at least two speed regimes, in particular at least one higher and at least one lower speed regime, wherein the higher speed regime starts from the waiting position and corresponds to at least 95% of the total distance, and the lower speed regime runs up to the welding point and corresponds to at most 5% of the total distance; and,
   - moving the welding electrode at a higher average speed in the higher speed regime than in the lower speed regime.

In a preferred embodiment, the distance of the higher speed regime corresponds to at least 96%, preferably 97%, more preferably 98%, still more preferably 99%, of the total distance.

In a preferred embodiment, the distance of the lower speed regime corresponds to at most 4%, preferably 3%, more preferably 2%, still more preferably 1%, of the total distance.

In a preferred embodiment, the average speed in the lower speed regime is at most 75%, preferably 65%, more preferably 50%, still more preferably 35%, still more preferably 25%, of the average speed in the higher speed regime.

In a preferred embodiment, the welding electrode decelerates after the higher speed regime and the welding electrode accelerates again before the lower speed regime.

In a preferred embodiment, the welding electrode temporarily comes to a halt or virtually comes to a halt at a pre-position situated between the higher speed regime and the lower speed regime.

In a preferred embodiment, the average speed in the higher speed regime is at least 50.0 mm/s to at most 500.0 mm/s, preferably 100.0 mm/s to 450.0 mm/s, or 100.0 mm/s to 400.0 mm/s, more preferably 150.0 mm/s to 350.0 mm/s, still more preferably 200.0 mm/s to 300.0 mm/s, for example 250.0 mm/s.

In a preferred embodiment, the distance of the higher speed regime is at least 10.0 mm to at most 30.0 mm, preferably 10.0 mm to 25.0 mm, 15.0 mm to 30.0 mm, or 15.0 mm to 25.0 mm, for example 20.0 mm.

In a preferred embodiment, the distance of the lower speed regime is at most 1.0 mm, preferably 0.9 mm, more preferably 0.8 mm, still more preferably 0.7 mm, still more preferably 0.6 mm, for example 0.5 mm.

In a preferred embodiment, the welding electrode moves in at least three speed regimes, in particular at least one higher and at least two lower speed regimes, wherein the first lower speed regime starts from the waiting position and runs up to a first transition point, corresponding to at most 5% of the total distance, the higher speed regime starts from the first transition point and runs up to a second transition point, corresponding to at least 90% of the total distance, and the second lower speed regime starts from the second transition point and runs up to the welding position, corresponding to at most 5% of the total distance.

In a preferred embodiment, the welding device comprises at least two welding electrodes which are arranged on either side of the longitudinal wires and/or transverse wires and form a set of welding electrodes; and this set of welding electrodes is connected to at least one, preferably at least two, electrical actuators which are configured to simultaneously move the welding electrodes from the waiting position to the welding position at the welding point.

In a preferred embodiment, the welding machine comprises a plurality of wire supply apparatuses which are arranged at various positions in the welding machine, preferably at least one wire supply apparatus for each supplied longitudinal wire and/or at least one wire supply apparatus for each supplied transverse wire.

In a preferred embodiment, the wire supply apparatus comprises a movable gripper which is configured for
- gripping one or more longitudinal wires and/or transverse wires at a gripping point, and
- positioning these longitudinal wires and/or transverse wires, preferably by pushing and/or pulling these longitudinal wires and/or transverse wires, at the welding point.

In a preferred embodiment, the wire supply apparatus is configured for:
- positioning the one or more longitudinal wires and/or transverse wires at a welding point when the welding electrode is not in a welding position, preferably when the welding electrode is in the waiting position or is moving towards the waiting position; and
- gripping and releasing the one or more longitudinal wires and/or transverse wires at a gripping point and when the welding electrode is in the welding position and it clamps these longitudinal wires and/or transverse wires securely at said welding point.

In a preferred embodiment, the method comprises the following steps:
(i) gripping one or more longitudinal wires and/or transverse wires at a gripping point by means of a wire supply apparatus, preferably provided with a gripper;
(ii) displacing these longitudinal wires and/or transverse wires to a welding point;
(iii) moving the welding electrode to a welding position, so that it clamps these longitudinal wires and/or transverse wires at said welding point;
(iv) releasing of these longitudinal wires and/or transverse wires by the wire supply apparatus; and
(v) moving the wire supply apparatus to the former gripping point;
(vi) gripping one or more, identical or different, longitudinal wires and/or transverse wires at the gripping point by means of the wire supply apparatus; and
(vii) moving the welding electrode to a waiting position.

In a preferred embodiment, the welding machine comprises a position sensor which is preferably fitted to the electrical actuator and is configured to determine the position of the welding electrode and/or to record changes in this position; and wherein the control unit is configured to receive data from the position sensor and to control the movement of the electrical actuator and/or the welding by the welding electrode on the basis thereof.

In a preferred embodiment, the control unit is configured to adjust the welding position by determining the presence and/or position of at least one longitudinal wire and/or transverse wire at the welding point; preferably by recording an increase in power of the electrical actuator without displacement of the welding electrode and comparing the value of the increasing power with a predetermined threshold value.

In a preferred embodiment, the control unit is configured to determine the welding position by detecting the presence and/or position of at least one longitudinal wire and/or transverse wire at the welding point.

In a preferred embodiment, the control unit is configured to determine the welding position by recording an increasing power of the electrical actuator without displacement of the welding electrode and to compare this value with a predetermined threshold value.

In a preferred embodiment, the control unit is configured to determine a contact distance which is defined as the distance between (i) the moving of the welding electrode out of the waiting position, preferably out of the pre-position, and (ii) the arrival of the welding electrode in the welding position, preferably by detecting the presence and/or position of at least one longitudinal wire and/or transverse wire at the welding point; and to determine, on the basis of the contact distance, the wire diameter of at least one longitudinal wire and/or transverse wire situated at the welding point and/or wear of the welding electrode.

In a preferred embodiment, the control unit is configured to move the welding electrode along from the welding position during welding in order to press the molten wires together to improve melting.

In a preferred embodiment, the control unit is configured to determine a weld distance which is defined as the distance between (i) the moving of the welding electrode out of the welding position during welding, and (ii) stopping the moving of the welding electrode by melting at least one longitudinal wire with at least one transverse wire at the welding point; and, on the basis of the weld distance, determine the wire diameter of at least one longitudinal wire and/or transverse wire situated at the welding point and/or wear of the welding electrode.

In a preferred embodiment, the welding machine comprises a welding electrode holder which is provided with a plurality of cooling ducts which are incorporated in the welding electrode holder and which are configured to circulate a coolant for cooling the welding electrode arranged in the welding electrode holder and are in communication with a liquid cooling system.

### DESCRIPTION OF THE FIGURES

In order to show the features of the invention in more detail, some preferred embodiments of the present invention are described in the attached figures without being limited thereto.

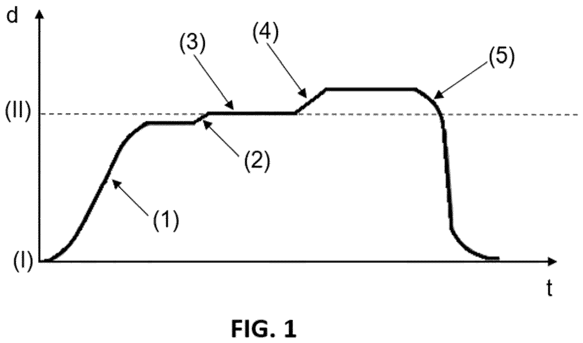

**FIG. 1** is a diagrammatic movement profile according to a preferred embodiment of the welding electrode. **FIG. 1** is described in more detail in **Example 1.**

### DETAILED DESCRIPTION

Before describing the aspects and embodiments of the present invention, it should be understood that this invention is not limited to the specific systems and methods or combinations described, since such systems and methods and combinations may of course vary. It should also be clear that the terminology used herein is not intended to be limiting, since the scope of the present invention is only limited by the attached claims.

All documents cited in the present specification are deemed to have been incorporated herein by way of reference.

As used below in this text, the singular forms "a", "an", "the" include both the singular and the plural, unless the context clearly indicates otherwise.

The terms "comprise", "comprises" as used below are synonymous with "including", "include" or "contain", "contains" and are inclusive or open and do not exclude additional unmentioned parts, elements or method steps. The terms "comprise", "comprises" include the term "contain".

The enumeration of numeric values by means of ranges of figures comprises all values and fractions in these ranges, as well as the cited end points.

The term "approximately" as used when referring to a measurable value, such as a parameter, an amount, a time period, and the like, is intended to include variations of +/- 10% or less, preferably +/-5% or less, more preferably +/-1% or less, and still more preferably +/-0.1% or less, of and from the specified value, in so far as the variations apply to the invention disclosed herein. It should be understood that the value to which the term "approximately" refers per se has also been disclosed.

In the following passages, various aspects of the invention are defined in more detail. Each aspect so defined may be combined with any other aspect or aspects unless clearly indicated to the contrary. In particular, any feature indicated as being "preferred" or "advantageous" may be combined with any other feature or features indicated as being "preferred" or "advantageous". Reference in this specification to "one embodiment" or "an embodiment" means that a particular feature, structure or characteristic described in connection with the embodiment is included in at least one embodiment of the present invention. Thus, appearances of the phrases "in one embodiment" or "an embodiment" in various places throughout this specification do not necessarily refer to the same embodiment, although this is not excluded. Furthermore, the described features, structures or characteristics may be combined in any suitable manner, as would be apparent to a person skilled in the art on the basis of this description. The embodiments described and claimed in the claims may be used in any combination. In the present description of the invention, reference is made to the attached drawings which form part thereof and illustrate specific embodiments of the invention. Figures in brackets or in bold linked to certain elements illustrate the respective elements by way of example, without limiting the elements as a result thereof. It should be understood that other embodiments may be used and structural or logical changes may be made without departing from the scope of the present invention. The following detailed description is not to be regarded as limiting, and the scope of the present invention is defined by the attached claims.

Unless defined otherwise, all terms disclosed in the invention, including technical and scientific terms, have the meaning which a person skilled in the art usually gives them. For further guidance, definitions are included to further explain terms which are used in the description of the invention.

In order to meet the above-described needs and overcome shortcomings of the prior art, the inventors have developed methods and means for the production of net structures consisting of a plurality of longitudinal wires and transverse wires which are welded to one another. These net structures may then be used as nets for the purpose of spacers in construction or industrial applications, such as in shopping trolleys, oven nets, barbecue nets, dishwasher trays, condenser panels for refrigerators or air conditioners and the like. The person skilled in the art will understand that the methods and means described in this document are not limited to the applications mentioned and that these are only mentioned for illustrative purposes.

The longitudinal wires and transverse wires refer to wires which are placed in the length direction and width direction, respectively, of the net structure, that is to say the transverse wires are placed transversely or virtually transversely across the longitudinal wires. These wires can be placed or folded according to a predetermined pattern. The pattern and the number of wires will determine the use of the net structure. The wires may be provided as straight wires or virtually straight wires which are placed or folded in accordance with a desired pattern by the welding machine.

In a simple embodiment, at least two straight or folded wires may be welded to one another in order to form a basic net structure. The person skilled in the art will understand how the complexity of the net structure may be increased by increasing the number of wires which are welded to one another and/or by folding the wires to form more complicated patterns. By way of example, two, preferably parallel, longitudinal wires may be welded to the same transverse wire, for example an upper longitudinal wire and a lower longitudinal wire. By way of example, three or more, preferably parallel, longitudinal wires may be welded to the same transverse wire, for example two upper longitudinal wires and one lower longitudinal wire, or one upper longitudinal wire and two lower longitudinal wires, etc. The person skilled in the art will understand which embodiments correspond to which applications of the net structures.

The wires will typically be made of a metal, such as steel wires or carbon steel wires, or in specific cases stainless steel wire. The length and diameter of the supplied wires may be adjusted to the desired embodiment of the net structure. The person skilled in the art will understand how the choice of material, wire diameter, pattern and weld distance will determine the structural properties of the net structure, such as the rigidity. The person skilled in the art may also appreciate that the wires described herein may also be bars, in particular longitudinal bars and transverse bars.

By way of example, the diameter of the wires may typically be between 1.0 and 20.0 mm. In lighter embodiments, the diameter of the wires may be between 1.0 and 5.0 mm. In heavier embodiments, the diameter of the wires may be between 10.0 and 15.0 mm. The wires may also have different diameters, for example with the transverse wire having a larger diameter than the longitudinal wire, or with the outer transverse wires having a larger diameter than the inner transverse wires, etc. The person skilled in the art will understand which embodiments correspond to which applications of the net structures.

The present invention will be explained below with regard to its different aspects. However, the person skilled in the art will understand that these different aspects are also connected to one another, so that an embodiment of a certain aspect also forms an embodiment of another aspect without this having to be mentioned explicitly. In particular, a preferred embodiment of the method for the production of net structures described in this document also forms a preferred embodiment of a welding machine which is configured for the production of net structures, as well as a preferred embodiment of the use of this welding machine for the production of net structures.

One aspect of the present invention relates to a welding machine for the production of net structures as described above, the welding machine comprising:
- a wire supply apparatus which is configured to position supplied longitudinal wires and transverse wires at one or more welding points;
- at least one welding electrode which is configured to weld the longitudinal wires and transverse wires to one another at the welding points,
- at least one electrical actuator which is connected to the welding electrode and is configured to move this welding electrode from a waiting position to a welding position at the welding points, and vice versa; and,
- a control unit which is configured for
   - controlling the movement of the electrical actuator;
   - dividing the total distance between the waiting position and the welding position into at least two speed regimes, in particular at least one higher and at least one lower speed regime, wherein the higher speed regime starts from the waiting position and corresponds to at least 95% of the total distance, and the lower speed regime runs up to the welding point and corresponds to at most 5% of the total distance;
   - moving the welding electrode at a higher average speed in the higher speed regime than in the lower speed regime.

A further aspect of the present invention relates to a method for the production of net structures as described above by means of a welding machine which comprises at least one welding electrode driven by at least one electrical actuator,
the method comprising the following steps:
(a). supplying longitudinal wires and transverse wires to the welding machine;
(b). positioning the longitudinal wires and transverse wires at a welding point, preferably by means of a wire supply apparatus;
(c). moving the welding electrode from a waiting position to a welding position at the welding point by means of the electrical actuator;
(d). welding the longitudinal wires and transverse wires to one another at the welding point by means of the welding electrode;
(e). moving the welding electrode from the welding position to the waiting position by means of the electrical actuator;
(f). optionally, repeating the above steps to produce a net structure;
   - wherein the moving in step (c) is carried out in at least two speed regimes, in particular at least one higher and at least one lower speed regime,
   - wherein the speed of the welding electrode in the higher speed regime is higher than the speed of the welding electrode in the lower speed regime, preferably a higher mean, minimum and/or maximum speed of the welding electrode.

Welding the wires to one another, in particular the longitudinal wires and transverse wires, for the production of the net structures described in this document, may be brought about by bringing a welding electrode into contact with at least one, preferably several, such as both, wires, so that this welding electrode can heat the wire by passing an electrical current through the wire. The longer the welding time, the greater the degree of melting will be, and the same is true for the current intensity used and the resistance of the wires and welding electrode. It is an advantage that the wires are also pressed together during welding, thus making satisfactory melting possible. Pressing together molten wires may be effected by the welding electrode itself or preferably by a set of welding electrodes, as will be described in further detail below.

In one embodiment, the welding machine may comprise a set of welding electrodes whose welding functions are connected to each other in the same welding cycle. A set of welding electrodes may comprise at least two welding electrodes which are provided on either side of the longitudinal wires and/or transverse wires. This makes it possible to support and heat the wires on either side when current flows from the one to the other welding electrode. This also makes it possible to support the wires during welding, so that deformation of the wires will remain limited.

The welding electrodes of the set of welding electrodes may be driven by at least one electrical actuator which is connected to the at least two welding electrodes provided on either side. Alternatively, the welding electrodes of the set of welding electrodes may be driven by different electrical actuators which are each connected to a separate welding electrode and are configured to move these welding electrodes simultaneously from a waiting position to a welding position.

In one embodiment, the welding machine may comprise at least two welding electrodes and/or at least two sets of welding electrodes which are provided at different welding points throughout the welding machine. These at least two welding electrodes or sets of welding electrodes may be connected to one another, so that they execute the same welding cycle, or they may be unconnected and follow a different welding cycle. The use of several electrodes may allow the wires to be welded simultaneously at several welding points. This makes it possible to increase the production rate, depending on the number of electrodes or sets of welding electrodes provided.

In one embodiment, the welding machine may comprise a welding electrode holder which is provided with a plurality of cooling ducts which are provided in the welding electrode holder and which are configured for circulating a coolant in order to cool down the welding electrode arranged in the welding electrode holder and are in communication with a liquid cooling system. Providing a welding electrode holder may make it possible to make the cooling ducts larger than usual and thus provide better cooling. The liquid cooling may comprise, for example, a cooling plate through which the coolant flows in order to dissipate the heat in a more efficient way. The present invention provides that the welding electrode described in this document is driven by an electrical actuator. This electrical actuator may be provided with an electrical motor which is connected to a component which is provided so as to be movable to provide a preferably linear movement to the welding electrode. The use of an electrical actuator provides several advantages compared to the conventional drive by means of a pneumatic or hydraulic actuator. In the first place, an electrical actuator provides a more accurate way of controlling the speed, position and force applied to the welding electrode, optionally by providing an encoder as will be discussed in more detail below. The person skilled in the art is supposed to know the further advantages of an electrical actuator, such as the improved efficiency, the lower maintenance requirements, the lower complexity (no leaks), etc. In addition, the settings of the movement profiles of an electrical actuator are fully adjustable. These settings can also be modified easily in accordance with the desired production parameters, such as the weld distance and welding time. The control of the electrical actuator according to the present invention will be explained in more detail below.

In one embodiment, the electrical actuator may comprise a welding cylinder which is configured to move the welding electrode by rotation of an electrically driven rotating axle. Providing an encoder in the welding cylinder on the rotating axle makes it possible to accurately monitor the operating parameters by measuring the rotary speed (that is to say the number of revolutions). This allows the speed of the welding electrode and the exact position to be monitored. In one preferred embodiment, the welding cylinder is provided with an absolute encoder, that is to say an encoder which immediately indicates the angular rotation of the rotating axle. The welding cylinder may also be provided with current/voltage sensors in order to monitor the welding time and welding intensity. Facilities to improve the control of the welding parameters will be discussed below in more detail.

The electrical actuator may be configured for moving the welding electrode between a waiting position and a welding position, with the "waiting position" corresponding to the position of the welding electrode during the transition to a subsequent welding cycle, which will typically correspond with a displacement of one or more wires through the welding machine and/or positioning thereof at a welding point, and wherein the "welding position" corresponds to a position of the welding electrode during welding in a welding cycle, which will typically correspond to a contact of the welding electrode with at least one wire, such as a longitudinal wire or transverse wire, preferably all wires, such as the longitudinal wires and transverse wires, situated at the welding point.

In a linear actuator, the total movement distance, or total distance for short, of the welding electrode will correspond to the direct distance between the waiting position and the welding position. The person skilled in the art will understand that the optimum welding position will correspond to the position of the welding electrode for the desired welding results and may therefore vary, depending on the settings of the welding machine. The person skilled in the art will also understand that the waiting position will correspond to the position of the welding electrode to ensure the desired safety of the user and/or welding machine and that this may therefore vary, depending on the settings of the welding machine. By reducing the total distance between the waiting position and the welding position, the welding cycle can be accelerated, but this will be to the detriment of other parameters, such as safety or the risk of defects.

In an exemplary embodiment, the total distance may be at least 10.0 mm to at most 30.0 mm, preferably 10.0 mm to 25.0 mm, 15.0 mm to 30.0 mm, or 15.0 mm to 25.0 mm, for example 20.0 mm. The inventors have found that the distances listed above provide an optimum balance between efficiency and safety. The person skilled in the art will understand that the numerical values are purely illustrative and the distance may be increased or decreased without annulling the technical effect of the present invention.

As described above, the present invention provides that the welding electrode moves between the waiting position and the welding position at different speeds. The total distance, defined above as the distance between the waiting position and the welding position, may be subdivided into at least two parts, in particular a higher and a lower speed regime. In this case, the "higher speed regime" refers to the part in which the speed of the welding electrode is greater than in the lower speed regime, and vice versa. Providing at least two speed regimes may cause the welding electrode to arrive at a lower speed and make contact with the longitudinal wires and transverse wires. This ensures that deformation or displacement of the wires can be reduced or prevented, as a result of which the occurrence of deviations in the finished net structure can be reduced.

In one embodiment, the at least two speed regimes are characterized by the fact that the higher speed regime starts from the waiting position and corresponds to at least 90% of the total distance, preferably at least 91%, 92%, 93%, or 94%, more preferably at least 95%, 96%, 97%, or 98%, still more preferably at least 99%, and the lower speed regime runs up to the welding point and corresponds to at most 10% of the total distance, preferably at most 9%, 8%, 7%, or 6%, more preferably at most 5%, 4%, 3%, or 2%, still more preferably at most 1%.

Providing different speed regimes may allow operation of the welding machine in a safe manual mode, in which the welding electrode moves at a low speed which is suitable for manually supplying longitudinal wires and/or transverse wires to the welding machine and/or manually positioning these longitudinal wires and/or transverse wires at a welding point. This makes it possible to adjust the welding process for the production of more complicated and/or custom-made net structures which require the involvement of an operator. The speeds when moving a welding electrode at a high speed, such as with pneumatic or hydraulic actuators, are far too high to be applied with the approved safety requirements.

The welding electrode may switch directly from the higher speed regime to the lower speed regime by reducing the speed. It is also possible for the welding electrode to decelerate after or towards the end of the higher speed regime, and subsequently to accelerate again at the start of the lower speed regime. Decelerating the welding electrode may ensure that it will move to the lower speed regime at the desired lower speed.

It is furthermore also possible for the welding electrode to temporarily come to a halt or virtually to a halt during the transition from the higher speed regime to the lower speed regime at a pre-position, wherein the "pre-position" corresponds to a position of the welding electrode between the at least one lower speed regime and the at least one higher speed regime. Providing a pre-position may make it possible to perform an additional check between the speed regimes and thus to ensure that the welding electrode will move into the lower speed regime at the desired lower speed. It will also be possible to measure and monitor certain production parameters more accurately if the welding electrode starts from a pre-position, for example by setting the pre-position as a reference point.

In one embodiment, the at least two speed regimes are characterized by the fact that the higher speed regime starts from the waiting position and runs up to a pre-position, in this case corresponding to at least 90% of the total distance, preferably at least 91%, 92%, 93%, or 94%, more preferably at least 95%, 96%, 97%, or 98%, still more preferably at least 99%, and the lower speed regime starts from the pre-position and runs up to the welding position, in this case corresponding to at most 10% of the total distance, preferably at most 9%, 8%, 7%, or 6%, more preferably at most 5%, 4%, 3%, or 2%, still more preferably at most 1%.

Subsequently, it is an embodiment where the pre-position is positioned at at most 10% of the total distance, preferably at most 9%, 8%, 7%, or 6%, more preferably at most 5%, 4%, 3%, or 2%, from the welding position. In an exemplary embodiment, the pre-position may be positioned at a distance of at least 0.1 mm to at most 1.0 mm, more preferably 0.2 mm to 0.8 mm, still more preferably 0.3 mm to 0.7 mm, still more preferably 0.4 mm to 0.6 mm, for example 0.5 mm, from the welding position. The inventors have found that the distances listed above provide an optimum balance between efficiency and safety. The person skilled in the art will understand that the numerical values are purely illustrative and the distance may be increased or decreased without annulling the technical effect of the present invention.

As described above, the present invention provides that the welding electrode moves between the waiting position and the welding position at different speeds. These speeds may refer to the minimum and/or maximum speed of the welding electrode, but preferably refer to the average speed of the welding electrode. The average speed may be calculated as a function of the distance travelled per unit of time.

In one embodiment, the maximum speed in the lower speed regime is at most 75%, preferably 70%, 65%, 60%, or 55%, more preferably 50%, 45%, 40%, 35%, or 30%, still more preferably 25%, 20%, or 15%, still more preferably 10% or 5%, of the maximum and/or minimum speed in the higher speed regime.

In one exemplary embodiment, the maximum speed in the higher speed regime may be at least 500.0 mm/s to at most 1000.0 mm/s, preferably 550.0 mm/s to 950.0 mm/s, or 600.0 mm/s to 900.0 mm/s, more preferably 650.0 mm/s to 850.0 mm/s, or 700.0 mm/s to 800.0 mm/s, for example 750.0 mm/s.

In one embodiment, the average speed in the lower speed regime is at most 90%, 85%, or 80%, preferably 75%, 70%, 65%, 60%, or 55%, more preferably 50%, 45%, 40%, 35%, or 30%, still more preferably 25%, 20%, 15%, or 10%, of the average speed in the higher speed regime.

In one exemplary embodiment, the average speed in the higher speed regime may be at least 50.0 mm/s to at most 500.0 mm/s, preferably 100.0 mm/s to 450.0 mm/s, or 100.0 mm/s to 400.0 mm/s, more preferably 150.0 mm/s to 350.0 mm/s, still more preferably 200.0 mm/s to 300.0 mm/s, for example 250.0 mm/s.

In one exemplary embodiment, the average speed in the lower speed regime may be at least 25.0 mm/s to at most 250.0 mm/s, preferably 50.0 mm/s to 225.0 mm/s, or 75.0 mm/s to 225.0 mm/s, more preferably 100.0 mm/s to 200.0 mm/s, still more preferably 125.0 mm/s to 175.0 mm/s, for example 150.0 mm/s.

The inventors have found that the speeds listed above provide an optimum balance between efficiency and safety. The person skilled in the art will understand that the numerical values are purely illustrative and that the speeds may be increased or decreased without annulling the technical effect of the present invention.

In one exemplary embodiment, the average speed in the higher and/or lower speed regime may be adjusted, preferably adaptively, to the production line speed. The line speed will typically depend on the complexity of the net structure, for example providing curved wires during production may decrease the line speed. Adaptively adjusting the average speed of the welding electrode may limit wear of the actuator and increase the service life of the welding machine. Continuing on the above-described subdivision of the speed regimes, the present invention provides that the total distance, defined above as the distance between the waiting position and the welding position, may also be subdivided into more than two parts, for example three, four or more parts. In one embodiment, the total distance is subdivided into at least three speed regimes, in particular at least one higher and at least two lower speed regimes. The higher speed regime again refers to the part in which the mean and/or maximum speed of the welding electrode is higher than in the lower speed regime, and vice versa.

Providing at least three speed regimes may ensure that the welding electrode both departs at a lower speed from a waiting position and arrives at a lower speed at the welding position. Starting at a lower speed may reduce or prevent wear or defects of the electrical motor, as a result of which the service life of the electrical motor may be extended.

In one embodiment, the at least three speed regimes are characterized by the fact that the first lower speed regime starts from the waiting position and runs up to a first transition point, in this case corresponding to at most 10% of the total distance, preferably at most 9%, 8%, 7%, or 6%, more preferably at most 5%, 4%, 3%, or 2%, still more preferably at most 1%, the higher speed regime starts from the first transition point and runs up to a second transition point, in this case corresponding to at least 80% of the total distance, preferably at least 82%, 84%, 86%, or 88%, more preferably at least 90%, 92%, 94%, or 96%, still more preferably at least 98%, and the second lower speed regime starts from the second transition point and runs up to the welding position, in this case corresponding to 10% of the total distance, preferably at most 9%, 8%, 7%, or 6%, more preferably at most 5%, 4%, 3%, or 2%, still more preferably at most 1%.

In one embodiment, the at least three speed regimes are characterized by the fact that the first lower speed regime starts from the waiting position and runs up to a transition point, in this case corresponding to at most 10% of the total distance, preferably at most 9%, 8%, 7%, or 6%, more preferably at most 5%, 4%, 3%, or 2%, still more preferably at most 1%, the higher speed regime starts from the first transition point and runs up to a pre-position, in this case corresponding to at least 80% of the total distance, preferably at least 82%, 84%, 86%, or 88%, more preferably at least 90%, 92%, 94%, or 96%, still more preferably at least 98%, and the second lower speed regime starts from the pre-position and runs up to the welding position, in this case corresponding to 10% of the total distance, preferably at most 9%, 8%, 7%, or 6%, more preferably at most 5%, 4%, 3%, or 2%, still more preferably at most 1%.

The welding machine may comprise a position sensor which is preferably arranged on the electrical actuator and which is configured to determine the position of the welding electrode and/or to record changes in this position. In a preferred embodiment, the position sensor is an encoder which is arranged in the welding cylinder and which records the position and the movement of the welding electrode on the basis of the revolutions and/or angular rotation of the welding cylinder axle. The encoder may be provided with an integrated converter which converts the recorded mechanical movement of the welding cylinder to an electrical signal.

This position sensor, preferably encoder, may furthermore be connected to a control unit which is configured to receive (and process) data from the position sensor and, optionally, on the basis thereof to control the movement of the electrical actuator and/or the welding operation by the welding electrode. The control unit may furthermore be configured to derive one or more position-related parameters from the data received from the position sensor, such as the speed and/or acceleration of the welding electrode. The more signals per unit time are loaded, the more accurate the derived speed and/or acceleration. The received data may be an electrical signal which is supplied by the above-described converter.

Optionally, the welding electrode may be provided with additional sensors, such as an accelerometer. Providing additional sensors may increase the measurement accuracy or provide redundancy. Determining the position of the welding electrode is a preferred embodiment because it is not susceptible to wear of the moving parts, such as the motor, which could reduce the speed and acceleration of the actuator.

In order to start the welding process, the welding electrode has to be brought into contact with one or more wires, such as at least one longitudinal wire and at least one transverse wire, which are situated at the welding point. In order to ensure that the welding process is started correctly, the welding machine may optionally perform a wire-detecting process in order to detect the presence of one or more wires at the welding point. The provision of a set of welding electrodes may also make it possible to simultaneously detect the presence of both at least one longitudinal wire and at least one transverse wire on either side.

In one embodiment, the welding machine may comprise a position sensor which is preferably arranged on the electrical actuator and which is configured to determine the position of the welding electrode and is in communication with the control unit, which is configured to receive data from the position sensor and to detect the presence of one or more wires at the welding point on the basis thereof. In one preferred embodiment, this position sensor is an encoder as described above.

The presence of one or more wires at the welding point may be detected, for example, by moving the welding electrode at a lower speed, that is to say in the lower speed regime, against the wires which are situated at the welding point. The wires will block the further movement of the welding electrode, as a result of which a pressure force will be exerted on the wires by the welding electrode. The value of the exerted pressure force may be measured, for example, from the moment the position sensor indicates that the welding electrode is no longer moving (that is to say there is no displacement), but the supplied power of the actuator increases nevertheless (that is to say the pressure force increases). As soon as the built-up pressure force exceeds a predetermined threshold value, this may be connected to the presence of wires at the welding point.

In one embodiment, the control unit may be configured to detect the presence of one or more longitudinal wires and/or transverse wires at the welding point as a function of an increasing power of the electrical actuator while the welding electrode is not moving. The detection of the wires may be performed by exceeding a predetermined threshold value of the supplied power and/or the applied pressure force.

In one exemplary embodiment, the threshold value of the applied pressure force for detection of a wire may be set at at least 500 N up to at most 5000 N (that is to say 50 kg/cm² to 500 kg/cm² of pressure force), preferably 1000 N to 4500 N, more preferably 1000 N to 4000 N, still more preferably 1500 N to 3500 N, still more preferably 2000 N to 3000 N, for example 2500 N.

The inventors have found that the threshold values listed above achieve a satisfactory accuracy without breaking the wires. The person skilled in the art will understand that the numerical values are purely illustrative and the threshold value may be raised or lowered without annulling the technical effect of the present invention. In practice, the threshold value may also be adjusted in accordance with certain production parameters, such as the supplied wire thickness. The above-described wire-detecting process may furthermore be used to accurately adjust the welding position of the welding electrode to a position against the longitudinal wires and/or transverse wires present at the welding point. In particular, the control unit may be configured to set the welding position as the position of the welding electrode at which the presence of at least one or more longitudinal wires and/or transverse wires at the welding point has been detected, preferably according to an embodiment of the wire-detecting process as described above. In this way, the welding process may be started at the correct welding position of the welding electrode by the control unit with great accuracy.

Optionally, the welding machine may be configured to apply a hammer mode in which the welding electrode detects the presence of one or more wires at the welding point, preferably according to an embodiment as described above, and subsequently hammers the wires a few times. This makes it possible to remove dirt from the wires, such as remains of drawing soap or rolling skin. By first detecting the position of the one or more wires, it is possible to strike accurately at a higher speed, so that the wire will not be deformed or displaced by the impact. Before starting the welding process, an additional check may optionally be performed by determining the contact distance which is defined as the distance between (i) the movement of the welding electrode out of the waiting position, preferably out of the pre-position, and (ii) the arrival of the welding electrode in the welding position, preferably the detection of the presence of one or more longitudinal wires and/or transverse wires at the welding point according to an embodiment as described above.

In one embodiment, the welding machine may comprise a position sensor which is preferably arranged on the electrical actuator and which is configured to determine the position of the welding electrode and is in communication with the control unit which is configured to receive data from the position sensor and to determine the contact distance on the basis thereof, as defined above.

The contact distance may serve as an indication for characterizing the wires and/or identifying a problem with the wires and/or the welding electrode. Since the contact distance inter alia depends on the length of the welding electrode and the thickness of the wires, the expected contact distance may be set beforehand or may alternatively be determined by calibrating the welding machine before a welding session.

In one embodiment, the control unit may be configured to record the contact distance for each welding process and to store it in a data storage system, such as a hard disk. Recording contact distances of several welding points may make it possible to analyse the welding process net structures statistically. For example, on the basis of the stored contact distance, the mean contact distance and standard deviation for each welding point may be determined. Each welding point for which a contact distance was recorded which deviates from the calculated mean, for example by more than 25% or more than 50%, may be identified and checked for welding problems, such as the supply of wires of an incorrect wire diameter. Further examples are described below.

In one embodiment, the control unit may be configured to a deviation in the wire diameter of at least one longitudinal wire and/or transverse wire situated at the welding point on the basis of the above-described contact distance. For example, if the contact distance systematically changes during the supply of a new wire, this may indicate that an incorrect wire is being supplied, in particular an excessively thick wire may decrease the contact distance and an excessively thin wire may increase it.

In one embodiment, the control unit may be configured to determine wear of the welding electrode on the basis of the above-described contact distance. For example, if the contact distance systematically starts to increase between every welding session, there may be wear of the welding electrode, that is to say that the welding electrode is becoming shorter. Identifying wear may make it possible to adjust the system, so that the necessary accuracy is maintained, or to replace the welding electrode.

Once in the welding position, the welding process may be started by passing an electrical current from the welding electrode through the one or more wires, such as at least one longitudinal wire and at least one transverse wire, which are situated at the welding point. An additional advantage of the above-described wire-detecting process is that penetration of the wires in the welding electrode can be limited to the welding position, as a result of which the penetration time of the welding electrode can be limited. This may increase the life of the welding electrodes and thus increase the service life of the welding machine.

During welding, the wires which are present may start to melt in order to form a melted welding point. The control unit may be configured to move the welding electrode along from the welding position during welding in order to press the molten wires together for improved melting. The welding electrode will be able to continue to move to a "melting position" which is defined as the position in which the molten wires form a melted welding point and stop the further movement of the welding electrode. Providing a set of welding electrodes may make it possible to simultaneously press the adjoining longitudinal wires and transverse wires against each other on both sides for improved melting.

After the welding process has been started, an additional check may optionally be performed by determining the weld distance which is defined as the distance between (i) the moving of the welding electrode out of the welding position, preferably during welding, and (ii) stopping the moving of the welding electrode by melting at least one longitudinal wire with at least one transverse wire at the welding point, preferably in a melting position as defined above.

In one embodiment, the welding machine may comprise a position sensor which is preferably arranged on the electrical actuator and which is configured to determine the position of the welding electrode and is in communication with the control unit which is configured to receive data from the position sensor and to determine the weld distance on the basis thereof as defined above.

The weld distance may serve as an indication for characterizing the wires and/or identifying a problem with the wires and/or the welding electrode. Since the weld distance depends, inter alia, on the correct operation of the welding electrode (that is to say the welding) and the thickness of the wires, the expected weld distance may be set beforehand or may, alternatively, be determined by calibrating the welding machine before a welding session. Furthermore, measuring the weld time may give an indication of the melting rate of the wires which depends, inter alia, on the thickness of the wires.

In one embodiment, the control unit may be configured to record the weld distance for each welding process and to store it in a data storage system, such as a hard disk. Recording the weld distances as a function of the welding points may make it possible to analyse the produced net structures statistically for quality control. For example, on the basis of the stored weld distances, the mean weld distance and standard deviation per produced net structure may be determined. Each welding point for which a weld distance was recorded which deviates from the calculated mean value, for example by more than 25% or by more than 50%, may be identified and checked for welding problems. Depending on the quality requirements, the produced net structure may be rejected from a certain number of deviations onwards. Additional examples are discussed below.

In one embodiment, the control unit may be configured to determine a deviation in the wire diameter of at least one longitudinal wire and/or transverse wire situated at the welding point on the basis of the above-described weld distance. For example, if the weld distance changes systematically during the supply of a new wire, this may be an indication that a wire with an incorrect wire diameter was supplied, in particular an excessively thick wire may increase the weld distance and an excessively thin wire may decrease it. For example, if the weld distance for a single welding process deviates once from the expected value, then this may be an indication of a welding defect, for example due to the absence or mispositioning of a wire.

In one embodiment, the control unit may be configured to determine wear of the welding electrode on the basis of the above-described weld distance. For example, if the weld distance between different welding cycles deviates systematically from the expected value, this may be an indication of a problem with the welding process, for example a defect of the welding electrode. Similarly, if the weld distance starts to increase systematically between different welding sessions, this may also be an indication of a problem with the welding process, for example wear of the welding electrode.

As described above, the present invention provides that the welding machine can displace at least one wire, such as a longitudinal wire or transverse wire, preferably all wires, such as the longitudinal wires and transverse wires, through the welding machine and/or position them at a welding point for the welding process. The displacement of the one or more wires may be performed by a wire supply apparatus. The person skilled in the art is assumed to know suitable devices for supplying and displacing wires through a welding mechanism.

In one embodiment, the wire supply apparatus comprises a movable gripper which is configured for gripping or clamping at least one wire and displacing this clamped wire, for example by pushing and/or pulling this wire by means of a mechanical pushing and/or pulling movement. The gripper may be provided, for example, on an end of a movable gripping arm which is provided on a rotating flywheel. This gripper may repeatedly grip a part of at least one wire at a gripping position, displace this wire, release it at another position, and subsequently return to the gripping position in order to repeat the above actions. The person skilled in the art will appreciate that this gripper may be replaced by an alternative clamping means and that the present invention is not limited to a specific embodiment thereof.

In one embodiment, the welding machine may comprise a plurality of wire supply apparatuses, preferably provided with a gripper, which are provided at different positions throughout the welding machine. In one preferred embodiment, the welding machine may comprise at least one wire supply apparatus per supplied longitudinal wire and/or at least one wire supply apparatus per supplied transverse wire. This may make it possible to displace the wires through the welding machine in an efficient manner.

In one embodiment, the displacement and/or positioning of the longitudinal wires and/or transverse wires may be performed by a wire supply apparatus comprising a movable gripper which is configured for
- gripping one or more longitudinal wires and/or transverse wires,
- displacing these longitudinal wires and/or transverse wires, preferably by pushing and/or pulling these longitudinal wires and/or transverse wires, through the welding machine, and/or
- positioning these longitudinal wires and/or transverse wires, preferably by pushing and/or pulling these longitudinal wires and/or transverse wires, at a welding point.

However, it is a shortcoming of wire supply apparatuses that they have to release the wire temporarily in order to return to the starting position. This results in the wires being able to move and consequently errors may occur during welding, for example by welding at the wrong point. Furthermore, the parts of the wire supply apparatus, such as the gripper, may move or grip the wire incorrectly after the latter was released, thus increasing the risk of errors.

The present invention provides a solution to this problem by synchronizing the release of the one or more wires by the wire supply apparatus with the welding process. In particular, the one or more wires may be clamped securely by the welding electrode in the welding position, so that they cannot move when the wire supply apparatus releases them. As a result thereof, the one or more wires remain clamped continuously during the production of the net structure and the risk of errors is significantly reduced.

In one embodiment, the displacing and/or positioning of the one or more wires may be performed by the wire supply apparatus when the welding electrode is not in a welding position, preferably when it is in the waiting position or moving to or from the waiting position, and the moving of the wire supply apparatus, preferably the releasing and the gripping of the one or more wires by the wire supply apparatus, may be performed when the welding electrode is in the welding position, in particular wherein the welding electrode clamps the one or more wires in this welding position.

In one embodiment, the method described herein may comprise the following steps:
(i) gripping one or more longitudinal wires and/or transverse wires at a gripping point by means of a wire supply apparatus, preferably provided with a gripper as described above;
(ii) displacing these longitudinal wires and/or transverse wires to a welding point;
(iii) moving the welding electrode to a welding position, so that it clamps these longitudinal wires and/or transverse wires at said welding point;
(iv) releasing of these longitudinal wires and/or transverse wires by the wire supply apparatus; and
(v) optionally, moving the wire supply apparatus to the former gripping point;
(vi) gripping one or more, identical or different, longitudinal wires and/or transverse wires at the gripping point by means of the wire supply apparatus; and
(vii) moving the welding electrode to a waiting position;
(viii) optionally, repeating the above steps for displacing these wires through the welding machine.

The inventors have found that this embodiment is particularly efficient in combination with the method described herein in which the welding electrode moves between the waiting position and the welding position at different speeds. In particular, providing a lower speed regime, so that the welding electrode arrives and makes contact with the longitudinal wires and transverse wires at a lower speed reduces or prevents deformation or displacement of the wires, so that the wire supply apparatus can accurately grip these wires again.

A further aspect of the present invention relates to the use of the welding machine described herein for the production of net structures as described above. In particular, the present invention relates to the use of a welding machine which is configured for the production of net structures by carrying out the method as described herein. It should be understood that the preferred embodiments of the welding machine as described herein also form preferred embodiments for the use of this welding machine.

It will also be understood that the use of the welding machine is understood to also include the use of all parts of this welding machine described herein. In particular, the present invention also relates to the use of a welding electrode and/or electrical actuator as described herein.

It will also be understood that the method also provides means which a person skilled in the art would employ in order to carry out the method. In particular, the present invention also relates to a computer program comprising instructions which, if the program is carried out by a computer, cause this computer to carry out the method as described herein. This computer may be provided, for example, as a control unit which is configured to control a welding machine in order to carry out the method described herein.

### EXAMPLES

In order to show the features of the invention in more detail, some preferred embodiments are described below by way of example and without being limited thereto, with reference to the attached figures. The embodiments illustrated in the figures are preferred embodiments of the present invention and should by no means be interpreted as being limiting.

### Example 1:

In order to explain the present invention and its use in more detail, reference is made to **FIG. 1** which illustrates a movement profile according to a preferred embodiment of the welding electrode diagrammatically as the distance (d) travelled as a function of time (t). The total distance travelled by the welding electrode corresponds to the distance (d) between the waiting position (I) and the welding position (II). This complete movement profile, that is to say the movement of the welding electrode from the waiting position (I) to the welding position (II) and back to the waiting position (I), corresponds to a full welding cycle. The parts of the movement profile will be explained below in more detail.

As is illustrated in **FIG. 1****,** the welding electrode starts from a waiting position (I) and moves approximately 95% of the total distance in the direction of the welding position (II) in a higher speed regime (1), which corresponds to the steeper curve, following which this welding electrode slows down and changes over to a lower speed regime (2) for the next 5% of the total distance to the welding position, which corresponds to the less steep curve. Optionally, the welding electrode may temporarily come to a halt between the higher speed regime (1) and the lower speed regime (2) at a pre-position, but it may also change over directly.

Once in the welding position (II), the welding electrode comes into contact with wires which are situated at the welding point. Optionally, the welding electrode may build up pressure (3) by pushing against the wires. If the built-up pressure exceeds a predetermined threshold value, for example 2500 N which corresponds to a pressure force of 250 kg/cm², the presence of a wire at the welding point is confirmed and the welding process (4) may be started. During welding (4), the wires will melt, as a result of which the welding electrode can move along and press the wires against each other for improved melting action.

After the welding process (4), the welding electrode may open (5) again in order to then return to the waiting position (I). Optionally the movement of the welding electrode from the welding position (II) to the waiting position (I) may take place at a higher speed, as is illustrated by the steeper curve. The return of the welding electrode to the waiting position (I) completes this welding cycle of the welding electrode.

## Claims

1. Method for the production of net structures consisting of a plurality of longitudinal wires and transverse wires welded to one another by means of a welding machine which comprises at least one welding electrode driven by at least one electrical actuator;
the method comprising the following steps:
(a). supplying longitudinal wires and transverse wires to the welding machine;
(b). positioning the longitudinal wires and transverse wires at a welding point;
(c). moving the welding electrode from a waiting position to a welding position at the welding point;
(d). welding the longitudinal wires and transverse wires to one another at the welding point;
(e). moving the welding electrode from the welding position to the waiting position;
(f). optionally, repeating the above steps to produce a net structure;
**characterized in that** the moving in step (c) is carried out in at least two speed regimes, in particular at least one higher and at least one lower speed regime,
- wherein the higher speed regime starts from the waiting position and corresponds to at least 95% of the total distance which is defined as the distance between the waiting position and the welding position, preferably to at least 96%, preferably 97%, more preferably 98%, still more preferably 99%, of the total distance, and the lower speed regime runs up to the welding position and corresponds to at most 5% of the total distance, preferably at most 4%, preferably 3%, more preferably 2%, still more preferably 1%, of the total distance, and
- wherein the average speed of the welding electrode in the higher speed regime is higher than the average speed in the lower speed regime.

2. Method according to Claim 1, wherein the average speed in the lower speed regime is at most 75%, preferably 60%, more preferably 50%, still more preferably 40%, still more preferably 25%, of the average speed in the higher speed regime.

3. Method according to one of Claims 1 to 2, wherein the welding electrode decelerates after the higher speed regime and the welding electrode accelerates again before the lower speed regime, and preferably wherein the welding electrode temporarily comes to a halt or virtually comes to a halt at a pre-position situated between the higher speed regime and the lower speed regime.

4. Method according to one of Claims 1 to 3, wherein the moving in step (c) is performed in at least three speed regimes, in particular at least one higher and at least two lower speed regimes, wherein the first lower speed regime starts from the waiting position and runs up to a first transition point, in this case corresponding to at most 2% of the total distance, the higher speed regime starts from the first transition point and runs up to a second transition point, in this case corresponding to at least 96% of the total distance, and the second lower speed regime starts from the second transition point and runs up to the welding position, in this case corresponding to at most 2% of the total distance.

5. Method according to one of Claims 1 to 4, wherein the positioning of the longitudinal wires and/or transverse wires in step (b) is performed by a wire supply apparatus comprising a movable gripper which is configured for
- gripping one or more longitudinal wires and/or transverse wires at a gripping point,
- displacing these longitudinal wires and/or transverse wires through the welding machine; and
- positioning these longitudinal wires and/or transverse wires at a welding point.
preferably comprising the steps
(i) gripping one or more longitudinal wires and/or transverse wires at the gripping point by means of the wire supply apparatus;
(ii) positioning these longitudinal wires and/or transverse wires at the welding point;
(iii) moving the welding electrode to the welding position, so that it clamps these longitudinal wires and/or transverse wires at said welding point;
(iv) releasing of these longitudinal wires and/or transverse wires by the wire supply apparatus;
(v) moving the wire supply apparatus to the former gripping point;
(vi) gripping one or more, identical or different, longitudinal wires and/or transverse wires at the gripping point by means of the wire supply apparatus; and
(vii) moving the welding electrode to the waiting position.

6. Welding machine which is configured for the production of net structures consisting of one or more longitudinal wires and transverse wires which are welded to one another;
the welding machine comprising:
- a wire supply apparatus which is configured to position supplied longitudinal wires and transverse wires at one or more welding points;
- at least one welding electrode which is configured to weld the longitudinal wires and transverse wires to one another at the welding points,
- at least one electrical actuator which is connected to the welding electrode and is configured to move this welding electrode from a waiting position to a welding position at the welding points, and vice versa; and,
- a control unit which is configured for controlling the movement of the electrical actuator;
**characterized in that** the control unit is configured for dividing the total distance between the waiting position and the welding position into at least two speed regimes, in particular at least one higher and at least one lower speed regime,
- wherein the higher speed regime starts from the waiting position and corresponds to at least 95% of the total distance, preferably at least 96%, preferably 97%, more preferably 98%, still more preferably 99%, of the total distance, and the lower speed regime runs up to the welding point and corresponds to at most 5% of the total distance; preferably at most 4%, preferably 3%, more preferably 2%, still more preferably 1%, of the total distance; and,
- moving the welding electrode at a higher average speed in the higher speed regime than in the lower speed regime.

7. Welding machine according to Claim 6, wherein the average speed in the lower speed regime is at most 75%, preferably 60%, more preferably 50%, still more preferably 40%, still more preferably 25%, of the average speed in the higher speed regime.

8. Welding machine according to one of Claims 6 to 7, wherein the control unit is configured to decelerate the movement of the welding electrode after the higher speed regime, and then to accelerate it again before the lower speed regime, and preferably wherein the control unit is configured to temporarily bring the welding electrode to a halt or virtually to a halt at a pre-position situated between the higher speed regime and the lower speed regime.

9. Welding machine according to one of Claims 6 to 8, wherein the control unit is configured to divide the distance between the waiting position and the welding position in at least three speed regimes, in particular at least one higher and at least two lower speed regimes, wherein the first lower speed regime starts from the waiting position and runs up to a first transition point, in this case corresponding to at most 2% of the total distance, the higher speed regime starts from the first transition point and runs up to a second transition point, in this case corresponding to at least 96% of the total distance, and the second lower speed regime starts from the second transition point and runs up to the welding position, in this case corresponding to at most 2% of the total distance.

10. Welding machine according to one of Claims 6 to 9, wherein the welding device at least comprises:
- at least two welding electrodes which are arranged on either side of the longitudinal wires and/or transverse wires and form a set of welding electrodes; and at least two electrical actuators which are connected to the welding electrodes and which are configured to simultaneously move these welding electrodes from the waiting position to the welding position at the welding point, and vice versa; and/or
- a plurality of wire supply apparatuses which are arranged at various positions in the welding machine; preferably at least one wire supply apparatus for each supplied longitudinal wire and/or at least one wire supply apparatus for each supplied transverse wire, and preferably wherein the wire supply apparatus comprises a movable gripper which is configured for gripping one or more longitudinal wires and/or transverse wires at a gripping point and positioning these longitudinal wires and/or transverse wires at the welding point, still more preferably wherein the wire supply apparatus is configured for
- positioning the one or more longitudinal wires and/or transverse wires at the welding point when the welding electrode is not in the welding position, preferably when the welding electrode is in the waiting position; and,
- gripping and/or releasing the one or more longitudinal wires and/or transverse wires at a gripping point when the welding electrode is in the welding position and it clamps these longitudinal wires and/or transverse wires at the welding point.

11. Welding machine according to one of Claims 6 to 10, wherein the welding machine comprises a position sensor which is preferably fitted to the electrical actuator and is configured to determine the position of the welding electrode and/or to record changes in this position; and wherein the control unit is configured to receive data from the position sensor and to control the movement of the electrical actuator and/or the welding by the welding electrode on the basis thereof, preferably wherein the control unit is configured to determine the welding position by detecting the presence and/or position of at least one longitudinal wire and/or transverse wire at the welding point, and more preferably wherein the control unit determines the welding position by recording an increase in power of the electrical actuator without displacement of the welding electrode and comparing this value with a predetermined threshold value.

12. Welding machine according to one of Claims 6 to 11, wherein the control unit is configured to determine a contact distance which is defined as the distance between (i) the moving of the welding electrode out of the waiting position, preferably out of the pre-position, and (ii) the arrival of the welding electrode in the welding position, preferably by detecting the presence and/or position of at least one longitudinal wire and/or transverse wire at the welding point; and to determine, on the basis of the contact distance, the wire diameter of at least one longitudinal wire and/or transverse wire situated at the welding point and/or wear of the welding electrode.

13. Welding machine according to one of Claims 6 to 12, wherein the control unit is configured to move the welding electrode along from the welding position during welding in order to press the molten wires together to improve melting, preferably wherein the control unit is configured to determine a weld distance which is defined as the distance between (i) the moving of the welding electrode out of the welding position during welding, and (ii) stopping the moving of the welding electrode by melting at least one longitudinal wire with at least one transverse wire at the welding point; and, on the basis of the weld distance, determine the wire diameter of at least one longitudinal wire and/or transverse wire situated at the welding point and/or wear of the welding electrode.

14. Welding machine according to one of Claims 6 to 13, wherein the welding machine comprises a welding electrode holder which is provided with a plurality of cooling ducts which are incorporated in the welding electrode holder and which are configured to circulate a coolant for cooling the welding electrode arranged in the welding electrode holder and are in communication with a liquid cooling system.

15. Use of a welding machine according to one of Claims 6 to 14 for the production of structures of net structures consisting of a plurality of longitudinal wires and transverse wires which are welded to one another.
